# EUROPEAN PATENT APPLICATION

(11) **EP 4 119 854 A1**
(43) Date of publication of application: **18.01.2023**
(21) Application number: 22183289.2
(22) Date of filing: 06.07.2022
(51) Int. Cl.: F24F 1/0035, F24F 1/0011, F24F 11/77, F24F 11/00

(54) **AIR-CONDITIONING SYSTEM**

(30) Priority: 13.07.2021 TW 110125712
(71) Applicant: Wei, Jung-Tsung, Tainan City 70157 (TW)
(72) Inventor: Wei, Jung-Tsung, Tainan City 70157 (TW)
(74) Representative: HGF

(57) **Abstract**

An air-conditioning system (100, 100', 100", 100a, 100b, 100c) includes an air-conditioning unit (2, 2", 2b) for supplying conditioned air to an activity space (900) defined by a compartment (800) and having an air-conditioning duct (20, 20", 20b) for guiding the conditioned air to the activity space (900), and at least one auxiliary air duct mechanism (3, 3') including an auxiliary air duct (31, 31') communicatingly connected to the air-conditioning duct (20, 20", 20b) for communicating the activity space (900) with the outside, and a fan (34) mounted in the auxiliary air duct (31, 31'). The auxiliary air duct (31, 31') has an auxiliary air inlet (314) for guiding therein the outside air, an inner air inlet opening (316, 316') for guiding therein the conditioned air, and an auxiliary air outlet (312) for discharging the outside air and the conditioned air into the activity space (900).

## Description

The disclosure relates to an air-conditioning system, more particularly to an air-conditioning system having an auxiliary oxygen supply function.

An air-conditioning system is a must-have device for many enclosed activity spaces today. For example, an air-conditioning system in a vehicle compartment space, and a central air-conditioning system and air-conditioning units in a building space can all be used to adjust the ambient temperature of the activity space. In order to maintain a stable ambient temperature of the activity space, when the air-conditioning system is turned on, the doors and the windows are usually closed, and the air-conditioning system is maintained in an internal circulation mode. However, there are safety problems in the use of such an air-conditioning system. When the air-conditioning system is maintained in the internal circulation mode for a period of time, air in the activity space will deteriorate, for example, the oxygen concentration will gradually decrease. The decrease of the oxygen concentration in the activity space will easily cause the people in the activity space to have poor spirits and reduced attention; for drivers, it is easy to cause traffic accidents; and for office workers, it will affect their work efficiency.

Therefore, an object of the present disclosure is to provide an air-conditioning system that can alleviate at least one of the drawbacks of the prior art.

Accordingly, an air-conditioning system of this disclosure for providing conditioned air to an activity space defined by a compartment includes an air-conditioning unit for supplying the conditioned air to the activity space and having an air-conditioning duct for guiding the conditioned air to the activity space, and at least one auxiliary air duct mechanism which includes an auxiliary air duct fluidly connected to the air-conditioning duct for communicating the activity space with the outside, and a fan mounted in the auxiliary air duct. The auxiliary air duct has an auxiliary air inlet configured to communicate with the outside for guiding therein the outside air, an inner air inlet opening communicating with the air-conditioning duct for guiding therein the conditioned air, and an auxiliary air outlet for discharging the outside air and the conditioned air into the activity space. The fan is activated to generate an air flow toward the auxiliary air outlet.

Other features and advantages of the disclosure will become apparent in the following detailed description of the embodiments with reference to the accompanying drawings, of which:
FIG. 1 is a fragmentary top sectional view of an air-conditioning system according to the first embodiment of the present disclosure;
FIG. 2 is a functional block diagram of the first embodiment;
FIG. 3 is a fragmentary top sectional view of an air-conditioning system according to the second embodiment of the present disclosure;
FIG. 4 is a fragmentary side sectional view of an air-conditioning system according to the third embodiment of the present disclosure;
FIG. 5 is a fragmentary side sectional view of an air-conditioning system according to the fourth embodiment of the present disclosure;
FIG. 6 is a fragmentary top sectional view of an air-conditioning system according to the fifth embodiment of the present disclosure;
FIG. 7 is a functional block diagram of the fifth embodiment; and
FIG. 8 is a fragmentary top sectional view of an air-conditioning system according to the sixth embodiment of the present disclosure.

Before the present disclosure is described in greater detail with reference to the accompanying drawings and embodiments, it should be noted herein that like elements are denoted by the same reference numerals throughout the disclosure.

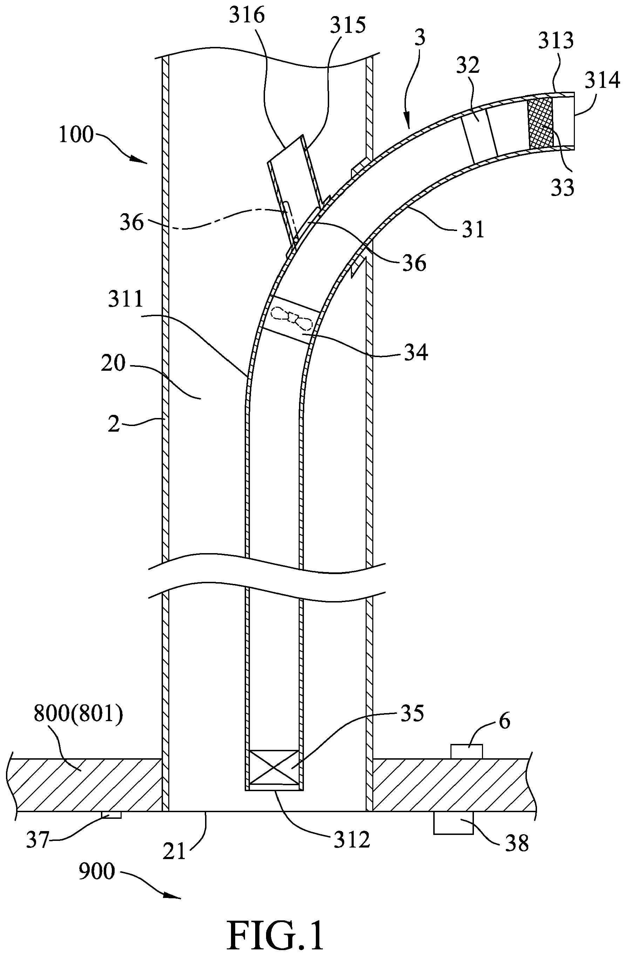

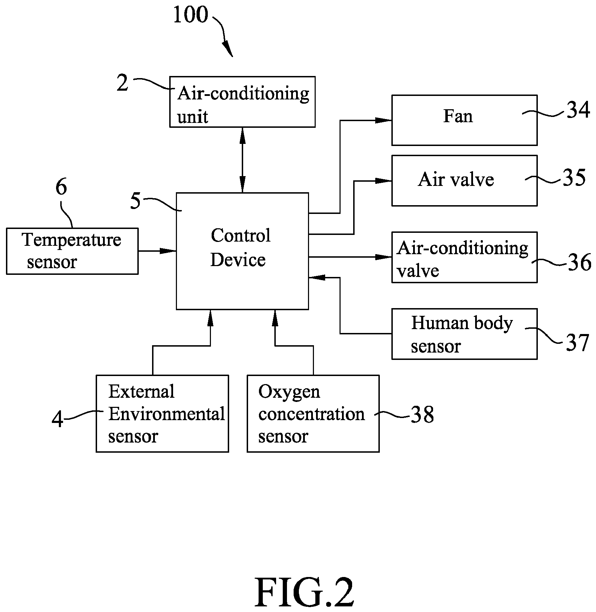

Referring to FIGS. 1 and 2, an air-conditioning system 100 according to the first embodiment of the present disclosure is suitable for providing conditioned air to an activity space 900 defined by a compartment 800. The compartment 800 and the activity space 900 may be, for example, but not limited to, a vehicle body and a compartment space defined by the vehicle body, or walls of a building and a living space defined by the walls. The conditioned air may be air of various temperatures.

The air-conditioning system 100 includes an air-conditioning unit 2, an auxiliary air duct mechanism 3, an external environmental sensor 4, a control device 5, and a temperature sensor 6.

In this embodiment, the air-conditioning unit 2 is exemplified as an air-conditioning unit installed in a vehicle. The air-conditioning unit 2 is signally connected to the control device 5, and is controlled and activated by the control device 5 to produce and supply conditioned air to the activity space 900. The air-conditioning unit 2 includes an air-conditioning duct 20 for guiding the conditioned air to the activity space 900 and having one end inserted into a wall 801 of the compartment 800, and a main air outlet 21 formed at the one end thereof and communicating with the activity space 900 for discharging the conditioned air into the activity space 900. Since there are many types of the air-conditioning unit 2 that can be installed in the vehicle, and since the air-conditioning unit 2 is not the focus of improvement of this disclosure, a detailed description thereof will be omitted herein for the sake of brevity.

The auxiliary air duct mechanism 3 includes an auxiliary air duct 31, a filter 33, a temperature controller 32, a fan 34, an air valve 35, an air-conditioning valve 36, a human body sensor 37 and an oxygen concentration sensor 38.

The auxiliary air duct 31 includes an inner duct section 311 inserted into the air-conditioning duct 20 and having an auxiliary air outlet 312 facing the main air outlet 21, an outer duct section 313 extending out of the air-conditioning duct 20 from one end of the inner duct section 311 that is distal to the auxiliary air outlet 312 and having an auxiliary air inlet 314 communicating with the outside, and an inner air inlet section 315 that communicates with the inner duct section 311, that protrudes from the inner duct section 311 into the air-conditioning duct 20, and that has an inner air inlet opening 316 communicating with the air-conditioning duct 20. The inner air inlet opening 316 faces a flow direction of the conditioned air in the air-conditioning duct 20.

The filter 33 and the temperature controller 32 are arranged in the outer duct section 313. The filter 33 is located in proximity to the auxiliary air inlet 314 for filtering pollutants in the outside air that flows into the inner duct section 311 through the auxiliary air inlet 314. The pollutants may be, for example, but not limited to, PM2.5 suspended particles, smoke particles, dust, etc. The filter 33 may be, for example, but not limited to, an air filter. The temperature controller 32 is located in proximity to the filter 33, and can be controlled and activated to perform temperature control processing on the air flow filtered by the filter 33. The temperature controller 32 may be, for example, but not limited to, a thermoelectric cooling chip. Since the filter 33 and the temperature controller 32 are known in the art, and have many types, they will not be described in detail for the sake of brevity.

The fan 34 is disposed in the inner duct section 311, and can be controlled and activated to generate an air flow in the inner duct section 311 toward the auxiliary air outlet 312.

The air valve 35 is disposed in the inner duct section 311 for openably closing the auxiliary air outlet 312 thereof. The air-conditioning valve 36 is disposed at a junction of the inner air inlet section 315 and the inner duct section 311, and can be controlled to openably close the inner air inlet section 315. Since there are many types of the air valve 35 and the air-conditioning valve 36, and the types of the air valve 35 and the air-conditioning valve 36 are not limited to those illustrated in the drawings, they will not be described in detail herein for the sake of brevity.

The human body sensor 37 and the oxygen concentration sensor 38 of this embodiment are disposed on the wall 801 of the compartment 800, are located on two opposite sides of the air-conditioning duct 20, and both face the activity space 900. The human body sensor 37 is used for sensing a human body in the activity space 900. For example, if a human body is detected in the activity space 900 by the human body sensor 37, the human body sensor 37 will generate and output a corresponding a human body sensing signal. In this embodiment, the human body sensor 37 is an infrared sensor that can sense human body temperature. However, in other variations of this disclosure, the human body sensor 37 may be an electrical sensor that can sense human body contact, or other sensors that can detect whether there is a human body present in the activity space 900. Since the human body sensor 37 is known in the art, a detailed description thereof is omitted herein.

The oxygen concentration sensor 38 is used for sensing an oxygen concentration in the activity space 900, and can generate and output an oxygen concentration signal. Since the oxygen concentration sensor 38 is known in the art, a detailed description thereof is omitted herein.

The external environmental sensor 4 is disposed externally of the activity space 900 for sensing external environmental parameters, for example, but not limited to, the concentration of PM2.5 suspended particles, carbon dioxide concentration, carbon monoxide concentration, smoke concentration, other toxic pollutant concentrations in the outside air, air humidity, etc., and generating a corresponding external environment signal.

The temperature sensor 6 is used for sensing an outside temperature which is outside the activity space 900 and generating a corresponding outside temperature signal. Since the temperature sensor 6 is not the focus of improvement of this disclosure, a detailed description thereof is omitted herein.

The control device 5 can be signally connected to the air-conditioning unit 2, the temperature controller 32, the fan 34, the air valve 35, the air-conditioning valve 36, the human body sensor 37, the oxygen concentration sensor 38, the external environmental sensor 4, and the temperature sensor 6 through a currently known wired communication technology and/or wireless communication technology. The control device 5 is operable to set the temperature of the air flow intended to be processed by the temperature controller 32, and is operable to control a rotational speed of the fan 34 to adjust the quantity of the air flow discharged from the auxiliary air outlet 312. The control device 5 is further operable to control the opening and closing of each of the air valve 35 and the air-conditioning valve 36, and to adjust the extent of opening of the air-conditioning valve 36 to thereby adjust the amount of the conditioned air introduced from the inner air inlet section 315.

The control device 5 can further receive and analyze the human body sensing signal, the external environment signal, the oxygen concentration signal and the outside temperature signal. The control device 5 can control the fan 34 to activate and the air valve 35 to open upon receiving the human body sensing signal, so that outside air can be sucked into the auxiliary air duct 31, and be discharged into the activity space 900 through the auxiliary air outlet 312. The oxygen concentration in the activity space 900 can be improved by providing the outside air therein. The control device 5 can further control the operation of the fan 34 to stop and to close the air valve 35 when it is analyzed and determined that the external environmental parameters corresponding to the external environment signal do not meet a usable air condition.

The control device 5 can further analyze the oxygen concentration signal, and when it is determined that the oxygen concentration is lower than a hypoxic threshold, and as the oxygen concentration gradually decreases, the fan 34 is controlled to gradually increase a rotational speed thereof. The control device 5 can further analyze the outside temperature signal to obtain the corresponding outside temperature. As the outside temperature gradually increases, the control device 5 correspondingly controls the extent of opening of the air-conditioning valve 36 to gradually increase.

In this embodiment, the determination of the external environment signal will take precedence over the human body sensing signal and the outside temperature signal. The result of the determination of the external environment signal will be used as a basis for whether to control the activation of the fan 34 and the opening of the air valve 35 according to the determination result of the human body sensing signal. After the fan 34 and the air valve 35 are controlled, the extent of opening of the air-conditioning valve 36 and the rotational speed of the fan 34 are further regulated respectively according to the outside temperature signal and the oxygen concentration signal. However, during implementation, the operation mode of the control device 5 according to the signals is not limited to the aforesaid disclosure.

To use the air-conditioning system 100 of this disclosure, the air-conditioning unit 2 is activated by the control device 5, so that conditioned air can be discharged into the activity space 900 through the air-conditioning duct 20. Then, the control device 5 will activate the fan 34 and will open the air valve 35 when it is determined that the external environment signal meets the usable air condition and that the human body sensing signal represents the presence of a human body. Through this, air rich in oxygen from the outside is sucked into the activity space 900 so as to increase the oxygen content in the activity space 900. Simultaneously, the temperature controller 32 is also activated by the control device 5 to adjust the temperature of the air flow passing therethrough.

Moreover, the control device 5 is also operated to control the extent of opening of the air-conditioning valve 36. When the air-conditioning valve 36 is opened, the inner air inlet section 315 of the auxiliary air duct 31 can receive the conditioned air in the air-conditioning duct 20 through the inner air inlet opening 316, and can guide the received conditioned air to flow toward the inner duct section 311. The received conditioned air is used to regulate the temperature of the sucked outside air. Then, the regulated air is discharged into the activity space 900, so that the temperature of the air discharged from the auxiliary air duct 31 and the temperature of the conditioned air discharged from the air-conditioning duct 20 are consistent.

In addition, when the oxygen concentration in the activity space 900 is reduced and is determined by the control device 5, the fan 34 is controlled to increase the rotational speed thereof so as to increase the amount of air inlet; and, when the outside temperature is increased and is determined by the control device 5, the extent of opening of the air-conditioning valve 36 is controlled to increase so as to introduce more conditioned air into the auxiliary air duct 31 for temperature regulation.

In this embodiment, the control device 5 can be manually operated to control whether to open the air valve 35 and the air-conditioning valve 36, and whether to activate the fan 34. The control device 5 can be further used to analyze the external environment signal and the human body sensing signal to automatically control whether to open the air valve 35 and the air-conditioning valve 36, and whether to activate the fan 34. However, in other variations of this embodiment, the control device 5 may also be provided with a timing control mechanism, which can control the opening of the air valve 35 at every interval of time and the operation of the fan 34 for a period of time so as to regularly replenish oxygen to the activity space 900.

Taking for example that the air-conditioning system 100 of this disclosure is installed in a home, the timing control mechanism of the control device 5 can be set to: during the day when going out to work, the operation of the fan 34 is stopped, and the air valve 35 is closed; and, during the night when returning to home after getting off from work, the fan 34 is activated, and the air valve 35 is opened.

Furthermore, in other variations of this embodiment, the control device 5 may be designed to activate the fan 34 intermittently, for example, every time the fan 34 is activated for three seconds, it will pause for five seconds, so that the air sucked into the auxiliary air duct 31 from the outside can temporarily stay in the inner duct section 311. Through this, the time for adjusting the temperature of the air staying in the inner duct section 311 by the conditioned air of the surrounding air-conditioning duct 20 can be prolonged, so that the temperature of the air in the inner duct section 311 is closer to the temperature of the conditioned air. Only then is the fan 34 activated again.

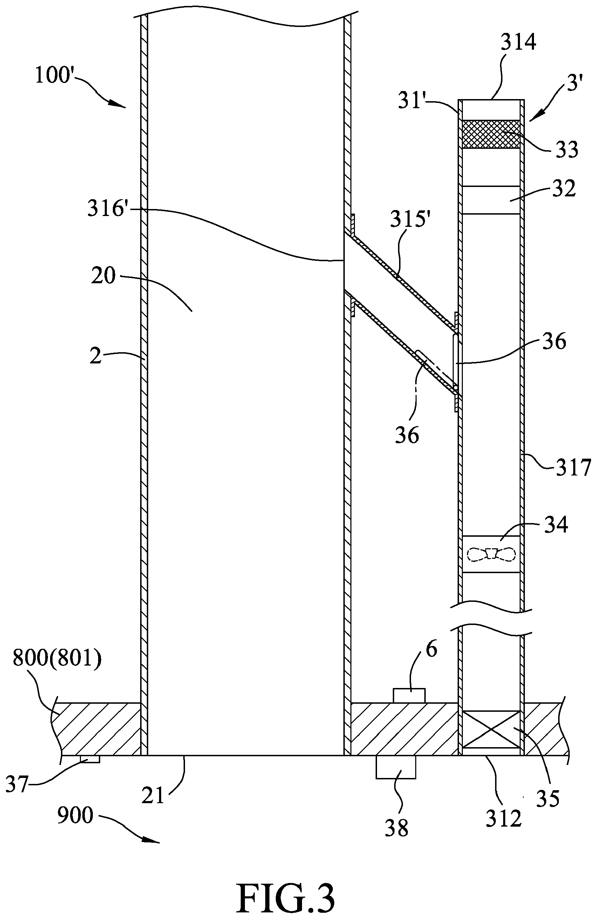

Referring to FIG. 3, the second embodiment of the air-conditioning system 100' of this disclosure is identical to the first embodiment, but differs in the structural design of the auxiliary air duct mechanism 3. In the second embodiment, the auxiliary air duct 31' of the auxiliary air duct mechanism 3' includes an auxiliary main duct section 317 and the inner air inlet section 315'. The auxiliary main duct section 317 is inserted and disposed on the wall 801 of the compartment 800 in proximity to the air-conditioning duct 20 for communicating the activity space 900 with the outside, and has the auxiliary air inlet 314 and the auxiliary air outlet 312. The inner air inlet section 315' is connected between and communicates with the auxiliary main duct section 317 and the air-conditioning duct 20, and has the inner air inlet opening 316'. The filter 33, the temperature controller 32, the fan 34 and the air valve 35 are all arranged and mounted in the auxiliary main duct section 317. The air-conditioning valve 36 is disposed at a junction of the inner air inlet section 315' and the auxiliary main duct section 317, and can be controlled by the control device 5 to open so as to communicate the auxiliary main duct section 317 and the inner air inlet section 315'. The inner air inlet section 315' can be similarly used for guiding the conditioned air in the air-conditioning duct 20 to flow toward the auxiliary main duct section 317.

Through the structural design of the auxiliary air duct mechanism 3', fresh air from the outside can be similarly guided into the activity space 900 so as to increase the oxygen content in the activity space 900.

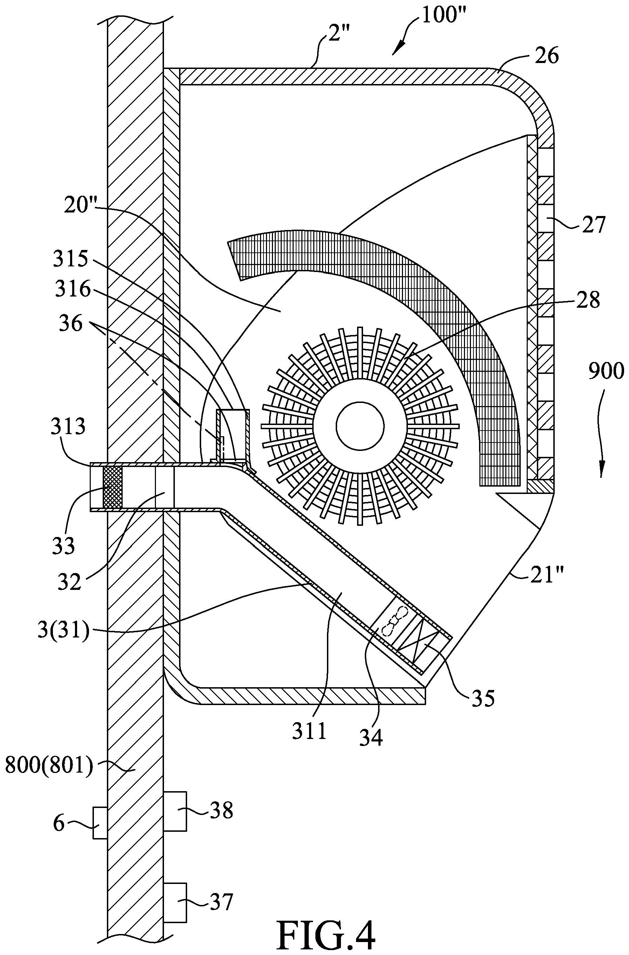

Referring to FIG. 4, the third embodiment of the air-conditioning system 100" of this disclosure is identical to the first embodiment, but differs in the structural design of the air-conditioning unit 2, and the connecting structure of the auxiliary air duct mechanism 3 and the air-conditioning unit 2. In the third embodiment, the air-conditioning unit 2" is an indoor unit of a split-type air-conditioning unit. The air-conditioning unit 2" has a housing 26, and the air-conditioning duct 20" is disposed in the housing 26. The air-conditioning duct 20" has a main air inlet area 27 formed in the housing 26, and a main air outlet 21" located immediately below the main air inlet area 27 and communicating with the activity space 900. The air-conditioning unit 2" further has an impeller 28 disposed in the air-conditioning duct 20" and can be driven to rotate so as to generate conditioned air. Since there are many types of indoor units of the split-type air-conditioning unit, a detailed description of the air-conditioning unit 2" is omitted herein, and the air-conditioning unit 2" is not limited to what is disclosed herein.

The inner duct section 311 of the auxiliary air duct 31 extends along an inner edge of the air-conditioning duct 20" toward the main air outlet 21", while the outer duct section 313 thereof has one end extending through the housing 26 at a side opposite to the main air inlet area 27 and the wall 801 of the compartment 800 for communication with the outside. The inner air inlet opening 316 of the inner air inlet section 315 faces a flow direction of the conditioned air generated by the impeller 28.

In this embodiment, the human body sensor 37 and the oxygen concentration sensor 38 are disposed on the wall 801 of the compartment 800 and facing the activity space 900. However, in other embodiments, the human body sensor 37 and the oxygen concentration sensor 38 are disposed on the housing 26 at a side facing the activity space 900.

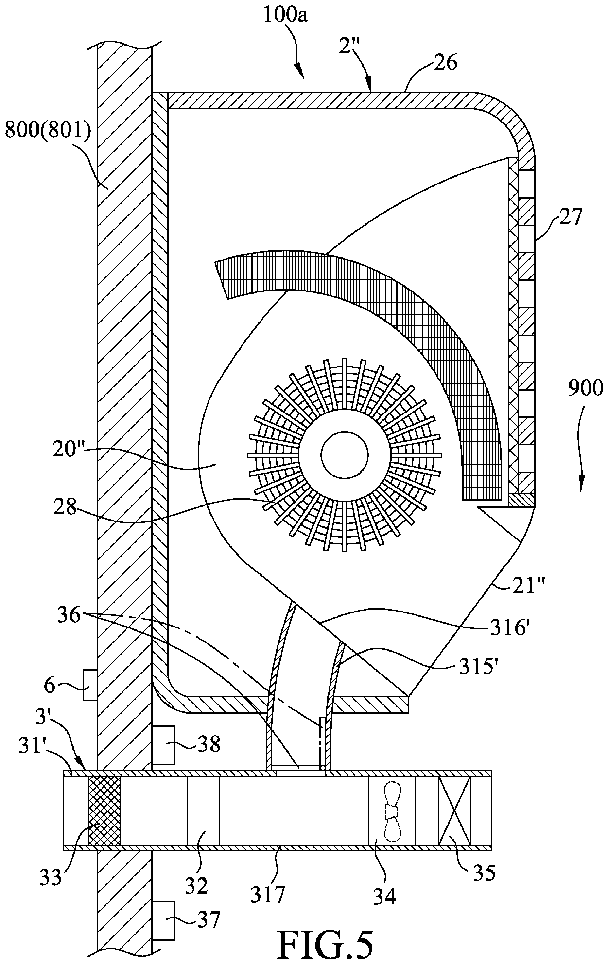

Referring to FIG. 5, the fourth embodiment of the air-conditioning system (100a) of this disclosure is identical to the third embodiment, but differs in that the structural design of the auxiliary air duct mechanism 3' of the second embodiment is used in the third embodiment. Hence, in the third embodiment, the auxiliary main duct section 317 of the auxiliary air duct 31' has one end extending through the wall 801 of the compartment 800 in proximity to and located below the housing 26 for communication with the outside, and the inner air inlet section 315' thereof extends through the housing 26, and is connected to and communicates with the air-conditioning duct 20" through the inner air inlet opening 316'. Through this structural design, supplemental oxygen can be similarly discharged into the activity space 900.

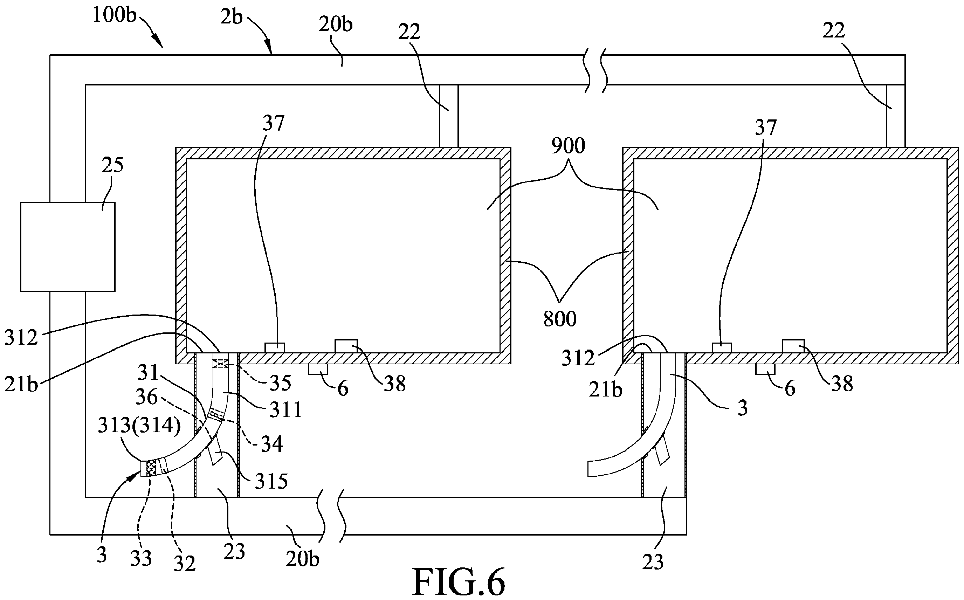

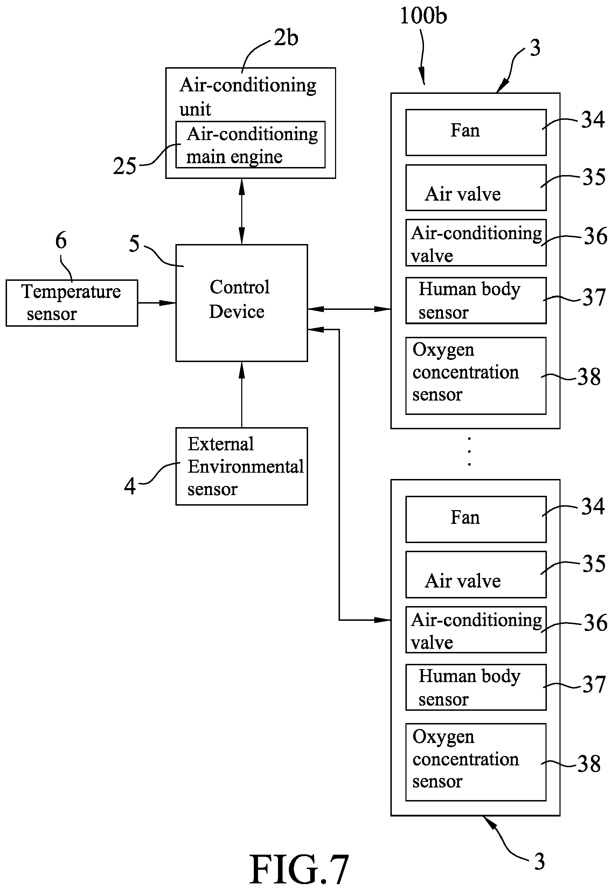

Referring to FIG. 6 and 7, the fifth embodiment of the air-conditioning system (100b) of this disclosure is identical to the first embodiment, but differs in the structural design of the air-conditioning unit 2, and the air-conditioning system (100b) is configured to provide conditioned air to a plurality of the activity spaces 900 respectively defined by a plurality of the compartments 800 (only two are shown in FIG. 6), and comprises a plurality of the auxiliary air duct mechanisms 3.

In the fifth embodiment, the air-conditioning unit (2b) of the air-conditioning system (100b) is connected to and communicates with the activity spaces 900, and includes an air-conditioning main engine 25, two air-conditioning ducts (20b) fluidly connected to two opposite sides of the air-conditioning main engine 25, a plurality of air suction sections 22 each of which is fluidly connected between one of the air-conditioning ducts (20b) and a corresponding one of the activity spaces 900, and a plurality of main air outlet sections 23 each of which is fluidly connected between the other one of the air-conditioning ducts (20b) and the corresponding one of the activity spaces 900. The air-conditioning main engine 25 is signally connected to the control device 5, and can be controlled and activated to produce conditioned air and to process air sucked from the air suction sections 22 into conditioned air. Since there are many types of air-conditioning main engine 25 that can produce the conditioned air, and since the air-conditioning main engine 25 is not the focus of improvement of this disclosure, a detailed description thereof is omitted herein.

Each main air outlet section 23 has a main air outlet (21b) for discharging the conditioned air into the corresponding activity space 900.

The auxiliary air duct mechanisms 3 are respectively disposed in the main air outlet sections 23. The auxiliary air duct 31 of each auxiliary air duct mechanism 3 includes the inner duct section 311 inserted into the respective main air outlet section 23 and having the auxiliary air outlet 312 facing the corresponding activity space 900, the outer duct section 313 extending out of the respective main air outlet section 23 and having the auxiliary air inlet 314, and the inner air inlet section 315 protruding from the inner duct section 311 into the respective main air outlet section 23. The human body sensor 37 and the oxygen concentration sensor 38 of each auxiliary air duct mechanism 3 are disposed in the respective activity space 900 for respectively sensing the presence of a human body and an oxygen concentration therein.

The control device 5 is signally connected to the auxiliary air duct mechanisms 3, the external environmental sensor 4 and the temperature sensor 6, and is operable to individually control the operation of the temperature controller 32, the fan 34, the air valve 35 and the air-conditioning valve 36 of each auxiliary air duct mechanism 3. The control device 5 will activate the fan 34 and open the air valve 35 of a corresponding one of the auxiliary air duct mechanisms 3 when it is determined that the external environmental parameters of the external environment signal meet the usable air condition and a human body is present in the corresponding activity space 900 so as to increase the oxygen concentration therein.

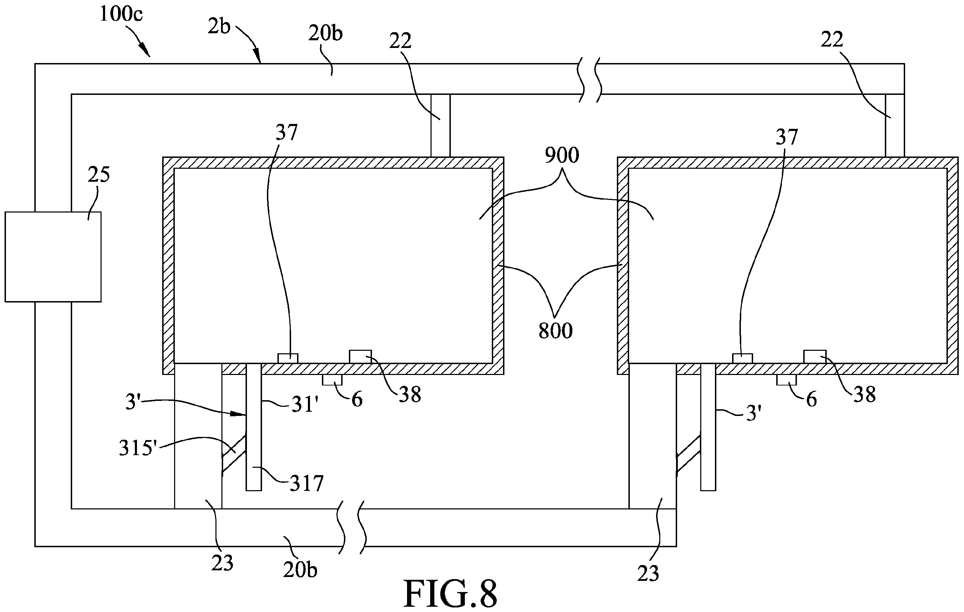

Referring to FIG. 8, the sixth embodiment of the air-conditioning system (100c) of this disclosure is identical to the fifth embodiment, but differs in that the structural design of each auxiliary air duct mechanism 3 of the fifth embodiment is changed to that of the auxiliary air duct mechanism 3' of the second embodiment. In the sixth embodiment, the auxiliary air duct 31' of each auxiliary air duct mechanism 3' has the auxiliary main duct section 317 fluidly connected to the respective activity space 900, and the auxiliary main duct section 317 is fluidly connected to the respective main air outlet section 23 through the inner air inlet section 315'.

In summary, in the air-conditioning system (100, 100', 100", 100a, 100b, 100c) of this disclosure, through the structural design of the auxiliary air duct mechanism(s) (3, 3') which fluidly communicates with the air-conditioning duct(s) (20, 20", 20b) of the air-conditioning unit (2, 2", 2b), oxygen-enriched fresh air from the outside can be sucked by the auxiliary air duct mechanism(s) (3, 3') and transported into the activity space(s) 900 through the auxiliary air duct (31, 31'). During the sucking and transporting of the outside air, the conditioned air produced by the air-conditioning unit (2, 2", 2b) can be introduced into the auxiliary air duct (31, 31') at the same time, and by pre-mixing the conditioned air which is adjusted to a preset temperature with the sucked outside air so as to adjust the temperature thereof, the temperature of the air discharged into the activity space 900 from the auxiliary air duct (31, 31') will be approximately the same as that of the conditioned air, and will not make the people in the activity space 900 feel uncomfortable due to the large temperature difference between the outside air and the conditioned air.

Furthermore, through the structural design of the control device 5 which can analyze and determine whether the sensing result of the external environment sensor 4 conforms to the usable air condition, and through the structural design of the human body sensor 37 of the auxiliary air duct mechanism(s) (3, 3') which can sense whether there is a human body in the activity space (s) 900, the control device 5 can automatically control to open the air valve 35 and to activate the fan 34 when it is determined that the outside air meets the usable air condition and a human body is present in the activity space(s) 900, and can adjust the extent of opening of the air-conditioning valve 36, so that supplemental oxygen can be supplied to the activity space 900 where a human body exists.

Moreover, through the control device 5, the rotational speed of the fan 34 can be correspondingly increased when the oxygen concentration in the activity space 900 is decreased, so that the air intake volume from the outside can be increased which, in turn, can help to increase the oxygen content in the activity space (s) 900. In addition, with the gradual increase of the outside temperature, the control device 5 can control to increase the extent of opening of the air-conditioning valve 36, so that the temperature of the sucked outside air can be effectively adjusted to be close to the temperature of the conditioned air, thereby improving the comfort level of the air blown from the air-conditioning system (100, 100', 100", 100a, 100b, 100c) into the activity space(s) 900.

Therefore, the air-conditioning system (100, 100', 100", 100a, 100b, 100c) of this disclosure is indeed a convenient and practical innovation, and can indeed achieve its object.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. An air-conditioning system (100, 100', 100", 100a, 100b, 100c) for providing conditioned air to an activity space (900) defined by a compartment (800), said air-conditioning system comprising an air-conditioning unit (2, 2", 2b) for supplying the conditioned air to the activity space (900), said air-conditioning unit (2, 2", 2b) including an air-conditioning duct (20, 20", 20b) for guiding the conditioned air to the activity space (900), **characterized by**:
at least one auxiliary air duct mechanism (3, 3') including an auxiliary air duct (31, 31') fluidly connected to said air-conditioning duct (20, 20", 20b) for communicating the activity space (900) with the outside, and a fan (34) mounted in said auxiliary air duct (31, 31'), said auxiliary air duct (31, 31') having an auxiliary air inlet (314) configured to communicate with the outside for guiding therein the outside air, an inner air inlet opening (316, 316') communicating with said air-conditioning duct (20, 20", 20b) for guiding therein the conditioned air, and an auxiliary air outlet (312) for discharging the outside air and the conditioned air into the activity space (900), said fan (34) being activated to generate an air flow toward said auxiliary air outlet (312).

2. The air-conditioning system **(100, 100", 100b)** as claimed in Claim 1, wherein said auxiliary air duct (31) includes an inner duct section (311) disposed in said air-conditioning duct (20, 20", 20b) and having said auxiliary air outlet (312), an outer duct section (313) extending out of said air-conditioning duct (20, 20", 20b) from one end of said inner duct section (311) that is distal to said auxiliary air outlet (312) and having said auxiliary air inlet (314), and an inner air inlet section (315) that communicates with said inner duct section (311), that protrudes from said inner duct section (311) into said air-conditioning duct (20, 20", 20b), and that has said inner air inlet opening (316).

3. The air-conditioning system (100, 100", 100b) as claimed in Claim 2, wherein said air-conditioning duct (20, 20", 20b) has a main air outlet (21, 21", 21b) for discharging the conditioned air into the activity space (900), and said auxiliary air outlet (312) of said inner duct section (311) faces said main air outlet (21, 21", 21b).

4. The air-conditioning system (100, 100", 100b) as claimed in any one of Claims 2 and 3, wherein said inner air inlet opening (316) of said inner air inlet section (315) faces a flow direction of the conditioned air in said air-conditioning duct (20, 20", 20b).

5. The air-conditioning system (100, 100", 100b) as claimed in Claim 2, wherein said at least one auxiliary air duct mechanism (3) further includes an air valve (35) disposed in said inner duct section (311) for openably closing said auxiliary air outlet (312) thereof.

6. The air-conditioning system (100', 100a, 100c) as claimed in Claim 1, wherein said air-conditioning duct (20) has one end configured to be inserted and disposed on a wall (801) of the compartment (800), said auxiliary air duct (31') including an auxiliary main duct section (317) configured to be inserted and disposed on the wall (801) of the compartment (800) in proximity to said air-conditioning duct (20) for communicating the activity space (900) with the outside, and an inner air inlet section (315') connected between and communicating with said auxiliary main duct section (317) and said air-conditioning duct (20), said auxiliary main duct section (317) having said auxiliary air inlet (314) and said auxiliary air outlet (312), said inner air inlet section (315') having said inner air inlet opening (316').

7. The air-conditioning system (100', 100a, 100c) as claimed in Claim 6, wherein said at least one auxiliary air duct mechanism (3') further includes an air valve (35) disposed in said auxiliary main duct section (317) for openably closing said auxiliary air outlet (312) thereof.

8. The air-conditioning system (100, 100', 100", 100a, 100b, 100c) as claimed in any one of Claims 5 and 7, further comprising a control device (5) that is signally connected to and that is operable to control said fan (34) and said air valve (35).

9. The air-conditioning system (100, 100', 100", 100a, 100b, 100c) as claimed in Claim 8, wherein said at least one auxiliary air duct mechanism (3, 3') further includes a human body sensor (37) signally connected to said control device (5) and configured to be disposed in the activity space (900) for sensing a human body in the activity space (900) and generating a human body sensing signal, said control device (5) controlling said fan (34) to activate and said air valve (35) to open upon receiving the human body sensing signal.

10. The air-conditioning system (100, 100', 100", 100a, 100b, 100c) as claimed in Claim 8, wherein;
said air-conditioning system (100, 100', 100", 100a, 100b, 100c) is configured to provide conditioned air to a plurality of the activity spaces (900) respectively defined by a plurality of the compartments (800);
said air-conditioning unit (2, 2", 2b) includes a plurality of main air outlet sections (23) for respectively communicating with the activity spaces (900) and for respectively discharging the conditioned air into the activity spaces (900); and
said air-conditioning unit (2, 2", 2b) includes a plurality of said auxiliary air duct mechanisms (3, 3') respectively disposed in said main air outlet sections (23) and signally connected to said control device (5).

11. The air-conditioning system (100, 100', 100", 100a, 100b, 100c) as claimed in Claim 10, wherein:
each of said auxiliary air duct mechanisms (3, 3') further includes a human body sensor (37) signally connected to said control device (5) and configured to be disposed in a respective one of the activity spaces (900) for sensing a human body in the respective one of the activity spaces (900) and generating a human body sensing signal; and
said control device (5) controls said fan (34) and said air valve (35) of a corresponding one of said auxiliary air duct mechanisms (3, 3') to activate and to open, respectively, upon receiving the human body sensing signal from said human body sensor (37) of the corresponding one of said auxiliary air duct mechanisms (3, 3').

12. The air-conditioning system (100, 100', 100", 100a, 100b, 100c) as claimed in Claim 8, wherein said at least one auxiliary air duct mechanism (3, 3') further includes an air-conditioning valve (36) disposed in said inner air inlet section (315, 315'), said air-conditioning valve (36) being controlled by said control device (5) to openably close said inner air inlet section (315, 315').

13. The air-conditioning system (100, 100', 100", 100a, 100b, 100c) as claimed in Claim 8, further comprising an external environmental sensor (4) configured to be disposed externally of the activity space (900) for sensing external environmental parameters and generating a corresponding external environment signal, said control device (5) being signally connected to said external environmental sensor (4), wherein, when said control device (5) analyzes and determines that the external environmental parameters corresponding to the external environment signal do not meet a usable air condition, the operation of said fan (34) is controlled by said control device (5) to stop.

14. The air-conditioning system (100, 100', 100", 100a, 100b, 100c) as claimed in Claim 1, wherein;
said air-conditioning system (100, 100', 100", 100a, 100b, 100c) is configured to provide conditioned air to a plurality of the activity spaces (900) respectively defined by a plurality of the compartments (800);
said air-conditioning unit (2, 2", 2b) includes a plurality of main air outlet sections (23) for respectively communicating with the activity spaces (900) and for respectively discharging the conditioned air into the activity spaces (900); and
said air-conditioning unit (2, 2", 2b) includes a plurality of said auxiliary air duct mechanisms (3, 3') respectively disposed in said main air outlet sections (23) and signally connected to said control device (5).

15. The air-conditioning system (100, 100', 100", 100a, 100b, 100c) as claimed in Claim 1, further comprising an oxygen concentration sensor (38) configured to be disposed in the activity space (900) for sensing an oxygen concentration in the activity space (900), and a control device (5) signally connected to said fan (34) and said oxygen concentration sensor (38), wherein, when said oxygen concentration sensor (38) senses that the oxygen concentration in the activity space (900) gradually decreases, a corresponding oxygen concentration signal is output to said control device (5), which, in turn, controls said fan (34) to gradually increase a rotational speed thereof.

16. The air-conditioning system (100, 100', 100", 100a, 100b, 100c) as claimed in any one of Claims 2 and 6, wherein:
said at least one auxiliary air duct mechanism (3, 3') further includes an air-conditioning valve (36) disposed in said auxiliary air duct (31, 31') and can be controllably opened for allowing the conditioned air to enter said auxiliary air duct (31, 31') after passing through said inner air inlet opening (316, 316');
said air-conditioning system (100, 100', 100", 100a, 100b, 100c) further comprises a temperature sensor (6) for sensing an outside temperature, and a control device (5) signally connected to said air-conditioning valve (36) and said temperature sensor (6); and
when the outside temperature sensed by said temperature sensor (6) gradually increases, said control device (5) correspondingly controls an extent of opening of said air-conditioning valve (36) to gradually increase.
